Europäisches Patentamt

European Patent Office

Office européen des brevets

(19)

(11) Veröffentlichungsnummer: **0 089 480**
**B1**

## (12) EUROPÄISCHE PATENTSCHRIFT

(45) Veröffentlichungstag der Patentschrift:
24.07.85

(51) Int. Cl.⁴: **B 01 D 59/18**

(21) Anmeldenummer: 83101172.1

(22) Anmeldetag: 08.02.83

(54) **Verfahren zum Herstellen von Trenndüsenelementen.**

(30) Priorität: 26.02.82 DE 3206820

(43) Veröffentlichungstag der Anmeldung:
28.09.83 Patentblatt 83/39

(45) Bekanntmachung des Hinweises auf die Patenterteilung:
24.07.85 Patentblatt 85/30

(84) Benannte Vertragsstaaten:
FR GB IT NL SE

(56) Entgegenhaltungen:
DE - B - 2 933 570
US - A - 3 668 080

(73) Patentinhaber: Kernforschungszentrum Karlsruhe
GmbH, Weberstrasse 5, D-7500 Karlsruhe 1 (DE)

(72) Erfinder: Becker, Erwin, Prof., Dr., Strählerweg 18,
D-7500 Karlsruhe 41 (DE)
Erfinder: Bier, Wilhelm, Dr., Grabener Weg 10,
D-7514 Leopoldshafen (DE)
Erfinder: Ehrfeld, Wolgang, Dr., Reutestrasse 27,
D-7500 Karlsruhe 41 (DE)
Erfinder: Münchmeyer, Dietrich, Haydnstrasse 17,
D-7504 Weingarten (DE)

## Beschreibung

Die Erfindung betrifft ein Verfahren zum Herstellen eines aus einem Trennkörper mit Abschlussplatten bestehenden Trenndüsenelements zur Trennung gas- oder dampfförmiger Gemische nach dem Oberbegriff des Anspruches 1. Unter gas- oder dampfförmigen Gemischen sind insbesondere Isotopengemische wie $^{235}UF_6$ und $^{238}UF_6$ zu verstehen, die wegen ihrer chemischen Eigenschaften besondere Anforderungen an das Material der Trenndüsenelemente stellen.

Beim Trenndüsenverfahren ist der zu minimalem spezifischem Energieverbrauch führende Gasdruck zu den charakteristischen Abmessungen der Trennstruktur umgekehrt proportional (Chemie Ing. Technik 39 [1967] S. 4). Da die spezifischen Kosten der für die Ausführung des Verfahrens erforderlichen Kompressoren, Rohrleitungen, Ventile und Steuereinrichtungen mit zunehmendem Gasdruck erheblich abnehmen, muss die Trenndüsenstruktur so klein wie möglich gewählt werden. Den heute verwendeten bzw. angestrebten Einlassdrücken zwischen 0,5 und 1,5 bar entsprechen dabei engste Weiten des Abschälerschlitzes der Trennstruktur zwischen 10 und 3 μm.

Zur Herstellung von Trenndüsen mit besonders kleinen charakteristischen Abmessungen ist es bekannt, diese aus einem Trennkörper und Abschlussplatten zusammenzusetzen. Der Trennkörper wird dabei von Trennstrukturen durchsetzt, die aus Trennräumen und Gasführungsleitungen bestehen, während die Abschlussplatten Kanäle für die Zu- und Abfuhr der Gasströme enthalten (s. DE-C Nr. 2933570).

An den Stellen, an denen die Trennstrukturen durch die Abdeckplatten begrenzt werden, ergibt sich naturgemäss eine Abbremsung der für die Trennung massgeblichen Gasströmung, woraus ein Verlust an Trennleistung resultiert. Dieser Verlust ist umso grösser, je kleiner das Verhältnis von Dicke des Trennkörpers zu engster Weite des Abschälerschlitzes (Trennkörper-Aspektverhältnis) ist. Um die durch die Abbremsung und den Abdeckplatten entstehenden Trennleistungsverluste ausreichend klein zu halten, müssen Trennkörper-Aspektverhältnisse zwischen 100 und 200 angestrebt werden. Bei einer engsten Weite des Abschälerschlitzes von 3 μm sollte der Trennkörper also eine Dicke zwischen 300 und 600 μm haben.

Trennkörper mit engsten Weiten der Abschälerschlitze von einigen μm lassen sich nach heutiger Kenntnis mit der erforderlichen Genauigkeit dadurch herstellen, dass aus einem durch energiereiche Strahlung in seinen Eigenschaften veränderbaren platten- oder schichtförmigen Material durch partielles Bestrahlen und partielles Entfernen von Material unter Ausnutzung der durch die Bestrahlung erzeugten unterschiedlichen Materialeigenschaften die Trennstrukturen enthaltenden Negativ-Formen hergestellt werden, die mit einem mit dem zu trennenden Gemisch verträglichen Material (Struktur-Material) aufgefüllt werden, worauf das Material der Negativ-Formen entfernt wird. Zur Erzielung besonders hoher Trennkörper-Aspektverhältnisse kann dabei ggf. schrittweise vorgegangen werden, wie dies in der DE-C Nr. 2933570 beschrieben ist.

Die auf diese Weise hergestellten Trenndüsenelemente ermöglichen wegen ihrer extrem kleinen charakteristischen Abmessungen und des damit verbundenen relativ hohen Gasdrucks erhebliche Einsparungen bei den oben genannten Anlagenkomponenten. Die Kosten für die Herstellung der Trenndüsenelemente selber sind jedoch, verglichen mit den Kosten der übrigen Anlagenkomponenten, noch relativ hoch. Sie können daher einen erheblichen Bruchteil der in der Grössenordnung von mehreren Milliarden DM liegenden Investierungsgesamtkosten einer technischen Trenndüsenanlage ausmachen. Erschwerend ist dabei, dass gerade die bisher erfolgreichste Anwendung des oben genannten Herstellungsprinzips von der sogenannten Synchrotronstrahlung Gebrauch macht, wodurch die Produktion von der Verfügbarkeit eines aufwendigen Elektronenbeschleunigers abhängig ist.

Der vorliegenden Erfindung liegt die Aufgabe zugrunde, unter voller Wahrung der mit den kleinen charakteristischen Abmessungen und hohen Trennkörper-Aspektverhältnissen verbundenen technischen und wirtschaftlichen Vorteile die Herstellung im Hinblick auf eine Massenproduktion der Trenndüsenelemente zu vereinfachen und darüber hinaus von der Verfügbarkeit aufwendiger Bestrahlungseinrichtungen weitgehend unabhängig zu machen.

Für die Lösung dieser Aufgabe werden die im Kennzeichen der Patentansprüche enthaltenen Massnahmen vorgeschlagen.

Die Erfindung beruht auf der überraschenden Erkenntnis, das die für die Herstellung des Trennkörpers benötigte extrem fein strukturierte Formschicht durch Abformen eines die Positive der Trennstruktur aufweisenden, wiederholt benutzbaren Werkzeugs erzeugt werden kann. Durch das Verfahren der Erfindung wird die Herstellung der Trenndüsenelemente nicht nur wesentlich vereinfacht und verbilligt, sondern auch von der Verfügbarkeit aufwendiger Bestrahlungseinrichtungen weitgehend unabhängig gemacht.

Als Material für die Abformung des Werkzeuges können die verschiedensten Stoffe verwendet werden.

Beispielsweise kann man einen Kunststoff verwenden, der sich leicht vom Werkzeug trennen lässt, so dass die äusserst feinen Strukturen beim Entfernen des Werkzeugs nicht beschädigt werden. Dabei kann es vorteilhaft sein, die die Negative der Trennstrukturen enthaltende Formschicht auf einer Abschlussplatte zu erzeugen, die so ausgebildet ist, dass zwischen der Formschicht und der Abschlussplatte eine formschlüssige Verbindung entsteht. Auf diese Weise wird erreicht, das sich das Werkzeug relativ leicht von der Formschicht trennen lässt, während die Formschicht mit der Abschlussplatte fest verbunden bleibt. Die Abformung und anschliessende Trennung wird sehr erleichtert, wenn ein zunächst fliessfähiger Kunststoff verwendet wird, der in einen nichthaftenden, gummielastischen Zustand übergeht.

Bei einer bevorzugten Ausführungsform des erfindungsgemässen Verfahrens wird ein wiederholt benutzbares Werkzeug verwendet, das in an sich bekannter Weise durch Auffüllen einer lithographisch erzeugten Form z. B. durch galvanische Metallabscheidung hergestellt worden ist (vgl. z. B. DE-C Nr. 2933570).

Da bei der Massenproduktion viele Werkzeuge benötigt werden, die sich mit der Zeit abnutzen und ersetzt werden müssen, ist zur weiteren Verminderung der Fertigungskosten und zur Erreichung einer weitestgehenden Unabhängigkeit von aufwendigen Bestrahlungseinrichtungen vorteilhaft, dass diese Werkzeuge von einem Mutterwerkzeug abgeformt worden sind, das selbst nicht für die Massenproduktion verwendet wird.

Das erfindungsgemässe Herstellungsverfahren wird im folgenden mit einem Ausführungsbeispiel anhand der Fig. 1 bis 3 näher erläutert. Die den Trennkörper durchsetzenden Trennstrukturen und die Kanäle für die Zu- und Abfuhr der Gasströme in den Abschlussplatten sind aus Gründen der besseren Übersicht nur schematisch dargestellt. Eine tatsächliche Ausführungsform kann beispielsweise den Fig. 7 und 8 der DE-C Nr. 2933570 entnommen werden.

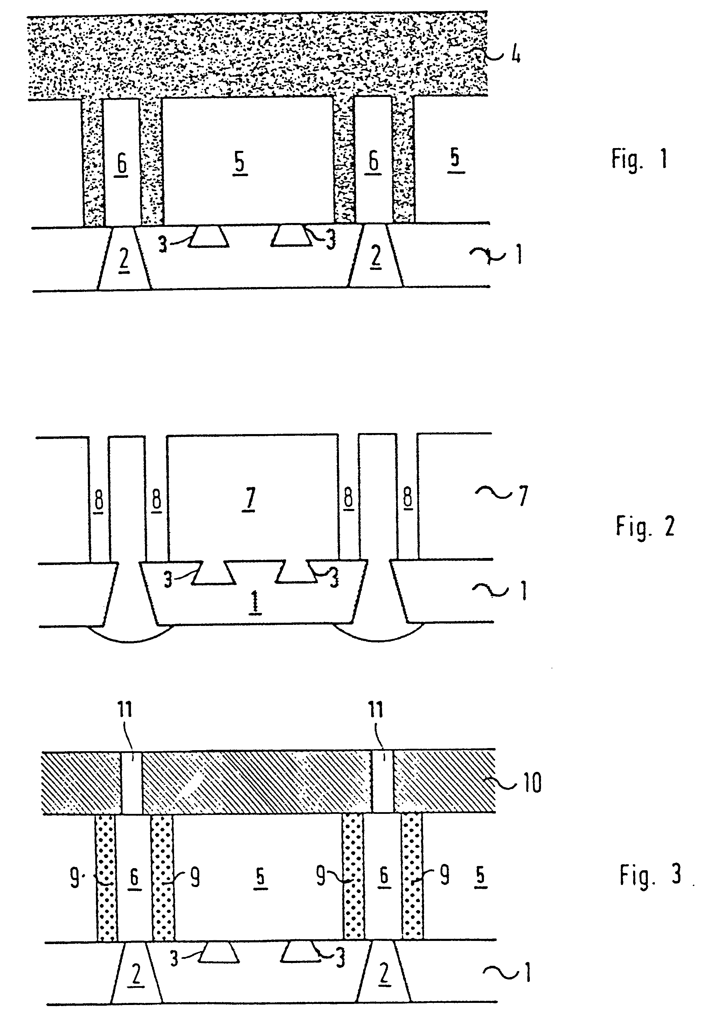

Aus einer Abschlussplatte 1, die konische Kanäle 2 für die Gasführung und schwalbenschwanzförmige Vertiefungen 3 besitzt, und dem Werkzeug 4, das die Positive der aus den Gasführungsleitungen 5 und den Trennräumen 6 bestehenden Trennstrukturen aufweist, wird entsprechend Fig. 1 eine Form gebildet. Die Form wird evakuiert und mit flüssigem Kunststoff vom Typ eines Siliconkautschuks gefüllt, der in einen nichthaftenden, gummielastischen Zustand übergeht. Das anschliessende Entfernen des Werkzeugs 4 gelingt wegen der geringen Haftkräfte und der gummielastischen Eigenschaften ohne Beschädigung der in Wirklichkeit äusserst feinen Trennstrukturen, wodurch der in Fig. 2 gezeigte Zustand entsteht. Durch die konische Ausbildung der Gasführungskanäle 2 und die schwalbenschwanzförmigen Vertiefungen 3 in der Abdeckplatte 1 wird trotz der geringen Haftkräfte des gummielastischen Kunststoffs eine feste Verbindung zwischen der Abschlussplatte 1 und der Formschicht 7 erreicht. Die leeren Räume 8 in der Formschicht 7 werden unter Verwendung der Abschlussplatte 1 als Elektrode durch galvanische Abscheidung von Nickel aufgefüllt, worauf das Formmaterial mit einem Lösungsmittel entfernt wird. Wie in Fig. 3 gezeigt ist, entsteht so auf der Abschlussplatte 1 ein aus den Nickelstrukturen 9 bestehender Trennkörper, der die Gasführungsleitungen 5 und die Trennräume 6 enthält. Er wird mit einer zweiten Abschlussplatte 10 abgedeckt, die mit Gasführungskanälen 11 versehen ist. Damit ist die Herstellung des aus dem Trennkörper 9 und den Abschlussplatten 1 und 10 bestehenden Trenndüsenelements abgeschlossen.

## Patentansprüche

1. Verfahren zum Herstellen eines aus einem Trennkörper mit Abschlussplatten bestehenden Trenndüsenelements zur Trennung gas- oder dampfförmiger Gemische, bei dem die den Trennkörper durchsetzenden Trennstrukturen aus Trennräumen und Gasführungsleitungen bestehen und die Abschlussplatten mit Kanälen für die Zu- und Abfuhr der Gasströme versehen sind, wobei zur Herstellung des Trennkörpers eine die Negative der Trennstrukturen enthaltende Formschicht erzeugt wird, die mit einem mit dem zu trennenden Gemisch verträglichen Struktur-Material aufgefüllt wird, worauf die Formschicht entfernt wird, dadurch gekennzeichnet, dass die die Negative der Trennstrukturen enthaltende Formschicht durch Abformen eines die Positive der Trennstrukturen aufweisenden, wiederholt benutzbaren Werkzeugs erzeugt wird.

2. Verfahren nach Anspruch 1, dadurch gekennzeichnet, dass als Material für das Abformen des wiederholt benutzbaren Werkzeugs ein vom Werkzeug leicht trennbarer Kunststoff verwendet wird.

3. Verfahren nach Anspruch 2, dadurch gekennzeichnet, dass die die Negative der Trennstrukturen enthaltende Formschicht auf einer Abschlussplatte erzeugt wird, die so ausgebildet ist, dass zwischen der Formschicht und der Abschlussplatte eine formschlüssige Verbindung entsteht.

4. Verfahren nach den Ansprüchen 1 bis 3, dadurch gekennzeichnet, dass als Material für das Abformen des wiederholt benutzbaren Werkzeugs ein fliessfähiger Kunststoff verwendet wird, der in einen gummielastischen Zustand überführbar ist.

5. Verfahren nach Anspruch 1, dadurch gekennzeichnet, dass das die Positive der Trennstrukturen aufweisende, wiederholt benutzbare Werkzeug durch Auffüllen einer die Negative der Trennstrukturen enthaltenden, auf einer Grundplatte erzeugten Formschicht mit einem für die wiederholte Abformung geeigneten Material und anschliessendes Entfernen der Formschicht hergestellt worden ist, wobei die die Negative der Trennstrukturen enthaltende Formschicht durch partielles Bestrahlen und partielles Entfernen einer durch Strahlen in ihren Eigenschaften veränderbaren Materialschicht hergestellt worden ist.

6. Verfahren nach Anspruch 1, dadurch gekennzeichnet, dass das die Positive der Trennstrukturen aufweisende, wiederholt benutzbare Werkzeug durch Abformen eines Mutterwerkzeuges erzeugt worden ist.

## Claims

1. Method for producing a separating nozzle element including a separating body and terminal plates, for the separation of gaseous and vaporous mixtures, wherein the separating body comprises separating structures which penetrate the separating body and define separating chambers and gas conduits, and the terminal plates are provided with channels for the intake and discharge of the gas streams, and wherein the separating body is formed by producing a mould layer which contains negative outlines of the separating structures, and thereafter filling the negative outlines of the mould layer with a structure material which is compatible with the gaseous or vaporous mixture to be separated and subsequent removal of the mould layer, comprising: producing the mould layer containing the negative outlines of the separating structures by copying the mould layer from a reusable tool provided with the positive outlines of the separating structures.

2. Method as defined in Claim 1, wherein the material for copying the reusable tool is a plastic material easily removable from the tool.

3. Method as defined in Claim 2, wherein the mould layer containing the negative outlines of the separating structures is produced on a terminal plate of such design that a form locking bond is established between the mould layer and the terminal plate.

4. Method as defined in Claims 1 to 3, wherein the material used for copying the reusable tool is a flowable plastic which can be transferred into a rubber-elastic state.

5. Method as defined in Claim 1, wherein the reusable tool containing the positive outlines of the separating structures is produced by filling a mould layer containing the negative outlines of the separating structures and produced on a base plate, with a material which is suitable for repeated copying and removal from the mould layer, with the mould layer containing the negative outlines of the separating structures being produced by partial irradiation and partial removal of a layer of material whose characteristics can be changed by radiation.

6. Method as defined in Claim 1, wherein the reusable tool containing the positive outlines of the separating structures is produced by copying a master tool.

## Revendications

1. Procédé pour la fabrication d'un élément de tuyère de séparation consistant en un corps séparateur avec plaques de fermeture, pour la séparation de mélange de gaz ou de vapeur, dans lequel les structures de séparation qui traversent le corps séparateur sont constituées par des chambres de séparation et des conduites de gaz, et les plaques de fermeture sont pourvues de canaux pour l'amenée et le départ des courants de gaz, procédé par lequel, pour la fabrication du corps séparateur, on produit une couche de moule contenant le profil négatif des structures, qu'on remplit avec un matériau de structure compatible avec le mélange à séparer, après quoi on retire la couche de moule, procédé caractérisé en ce que la couche de moule contenant le profil négatif des structures est réalisée par moulage d'un outil présentant le profil des structures de séparation, et utilisable à répétition.

2. Procédé suivant la revendication 1, caractérisé en ce que, comme matériau pour le moulage de l'outil utilisable à répétition, on utilise une matière synthétique facilement séparable de l'outil.

3. Procédé suivant la revendication 2, caractérisé en ce que la couche de moule contenant le profil négatif des structures séparatrices est réalisé sur une plaque de fermeture qui est constituée de telle manière qu'entre la couche de moule et la plaque de fermeture est prévue une liaison par engagement de forme.

4. Procédé suivant les revendications 1 à 3, caractérisé en ce que, comme matériau pour le moulage de l'outil utilisable à répétition, on emploie une matière synthétique capable de fluage, mise dans son état à élasticité analogue au caoutchouc.

5. Procédé suivant la revendication 1, caractérisé en ce que l'outil utilisable à répétition présentant le profil positif des structures séparatrices est fabriqué par remplissage d'une couche de moule produite sur une plaque de base, et contenant le profil négatif des structures séparatrices, avec un matériau approprié à un moulage répétitif, et retirant finalement la couche de moule, auquel cas la couche de moule contenant le profil négatif des structures séparatrices a été préalablement fabriquée par irradiations partielles et éloignements partiels d'une couche de matériau dont les propriétés sont modifiables par irradiation.

6. Procédé suivant la revendication 1, caractérisé en ce que l'outil utilisable à répétition présentant le profil négatif des structures séparatrices a été préalablement réalisé par moulage d'une matrice d'outil.

Fig. 1

Fig. 2

Fig. 3